# EUROPÄISCHE PATENTANMELDUNG

(11) **EP 0 692 502 A1**
(43) Veröffentlichungstag der Anmeldung: **17.01.1996**
(21) Anmeldenummer: 95109930.8
(22) Anmeldetag: 26.06.1995
(51) Int. Cl.: C08F 232/00, C08F 291/00, C08F 293/00

(54) **Cycloolefinpolymere**

(30) Priorität: 13.07.1994 DE 4425409
(71) Anmelder: HOECHST AKTIENGESELLSCHAFT, D-65929 Frankfurt am Main (DE); Mitsui Petrochemical Ind., Ltd., Tokyo (JP)
(72) Erfinder: Hatke, Wilfried, Dr., D-65719 Hofheim (DE); Osan, Frank, Dr., D-65779 Kelkheim (DE)
(74) Vertreter: Aulmich, Gerhard, Dr.

(57) **Zusammenfassung**

Die vorliegende Erfindung betrifft ein Cycloolefinpolymer mit einer Lösungsviskosität > 0,25 dl/g, enthaltend polymerisierte Einheiten mindestens eines Cycloolefins und gegebenenfalls polymerisierte Einheiten eines oder mehrerer acyclischer Olefine, dadurch gekennzeichnet, daß das Cycloolefinpolymer an einem oder beiden Enden eine olefinisch ungesättigte Gruppe mit mindestens 3 C-Atomen aufweist.

## Beschreibung

Die Erfindung bezieht sich auf Cycloolefinpolymere (COP) mit endständigen olefinisch ungesättigten Gruppen und einer Lösungsviskosität (VZ, eta) > 0,25 dl/g (gemäß DIN 53728 in Dekalin bei 135°C) sowie davon abgeleitete funktionalisierte Cycloolefinpolymere und Blockcopolymere und auf Verfahren zur Herstellung dieser Polymere.

Thermoplastische Cycloolefinpolymere sind in der Literatur beschrieben (EP 203 799, EP 283 164, DE 2421838, EP 156 464, EP 407 870). Sie zeichnen sich durch eine Reihe technologisch wichtiger Eigenschaften wie niedrige Wasseraufnahme, hohe Wärmeformbeständigkeit, hohe Elastizitätsmoduln und hydrolytische Beständigkeit aus. Allerdings sind sie schlecht mit anderen Stoffen, insbesondere Polymeren, mischbar und weisen schlechte Hafteigenschaften auf. Außerdem sind sie schwer funktionalisierbar.

In EP 441 548-A wird die Herstellung von Copolymeren mit endständigen olefinisch ungesättigten Endgruppen durch Copolymerisation von Ethylen und alpha-Olefinen mit bis zu 18 C-Atomen mit Ziegler/Natta-Katalysatoren beschrieben. WO 911488, DE 4030399 und WO 9324539 beschreiben die Herstellung von Homo- und Copolymeren mit olefinisch ungesättigten Endgruppen durch Polymerisation von Ethylen und alpha-Olefinen unter Verwendung von Metallocen-Katalysatoren. Reine Polypropylenoligomere mit verschiedenen Endgruppen werden in der DE 4030399 beschrieben. Bei den bislang bekannten Polymeren mit endständigen, olefinisch ungesättigten Gruppen handelt sich meist um Öle oder Wachse mit niedrigen Schmelzpunkten, die in funktionalisierter Form als Dispergierhilfsmittel in Kraftstoffen und Motorölen, als Viskositätsindexmodifikatoren oder als Emulgatoren eingesetzt werden können.

Es bestand somit die Aufgabe ein Polymer zu finden, welches die Nachteile des Standes der Technik vermeidet.

Die vorliegende Erfindung betrifft somit ein Cycloolefinpolymer mit einer Lösungsviskosität > 0,25 dl/g, enthaltend polymerisierte Einheiten mindestens eines Cycloolefins und gegebenenfalls polymerisierte Einheiten eines oder mehrerer acyclischer Olefine, dadurch gekennzeichnet, daß das Cycloolefinpolymer an einem oder beiden Enden eine olefinisch ungesättigte Gruppe mit mindestens 3 Kohlenstoffatomen (C-Atomen) aufweist.

Bevorzugt weist das erfindungsgemäße Cycloolefinpolymer an einem Ende eine olefinisch ungesättigte Endgruppe auf. Das Cycloolefinpolymer enthält polymerisierte Einheiten mindestens eines polycyclischen Olefins und bevorzugt auch polymerisierte Einheiten mindestens eines acyclischen Olefins.

Die endständige olefinisch ungesättigte Gruppe mit mindestens 3 C-Atomen hat bevorzugt die Formel I 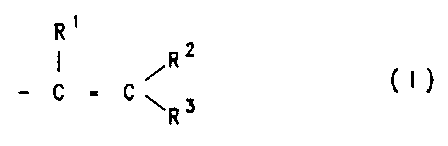
, worin R¹, R², R³ gleich oder verschieden sind und ein Wasserstoffatom, ein Kohlenwasserstoffrest oder ein halogenierter Kohlenwasserstoffrest sind, z.B. C₁-C₁₆-Alkyl, C₁-C₁₆-Aryl, C₁-C₁₆-Alkenyl, C₁-C₁₆-Halogenalkyl oder C₁-C₁₆-Halogenaryl. Außerdem können zwei der Reste R¹, R² und R³ zu einem Ring verbunden sein. Der C₁-C₁₆-Alkylrest oder C₁-C₁₆-Halogenalkylrest kann linear, verzweigt oder cyclisch sein. Der C₁-C₁₆- Arylrest kann substituiert oder unsubstituiert sein. Besonders bevorzugt sind lineare C₁-C₈-Alkylreste.

Besonders bevorzugt leitet sich die olefinisch ungesättigte Gruppe mit mindestens 3 C-Atomen von Propylen, 1-Buten, 1-Penten, 1-Hexen, 1-Hepten oder 1-Octen ab.

Bevorzugt sind Cycloolefinpolymere, enthaltend 0,1-100 Gew.-%, bevorzugt 0,1-99 Gew.-%, bezogen auf die Gesamtmasse des Cycloolefinpolymers, polymerisierte Einheiten mindestens eines polycyclischen Olefins der Formel I, II, III, IV, V, VI oder VII 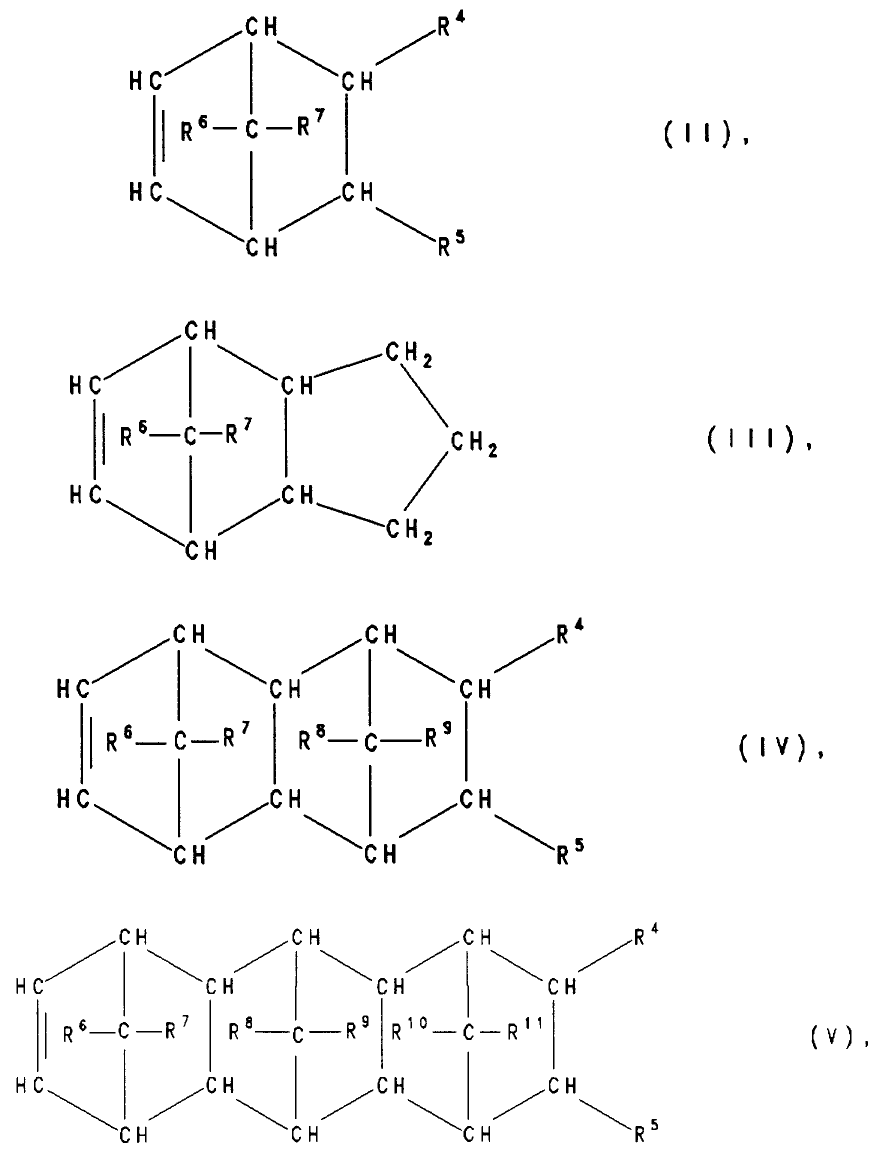 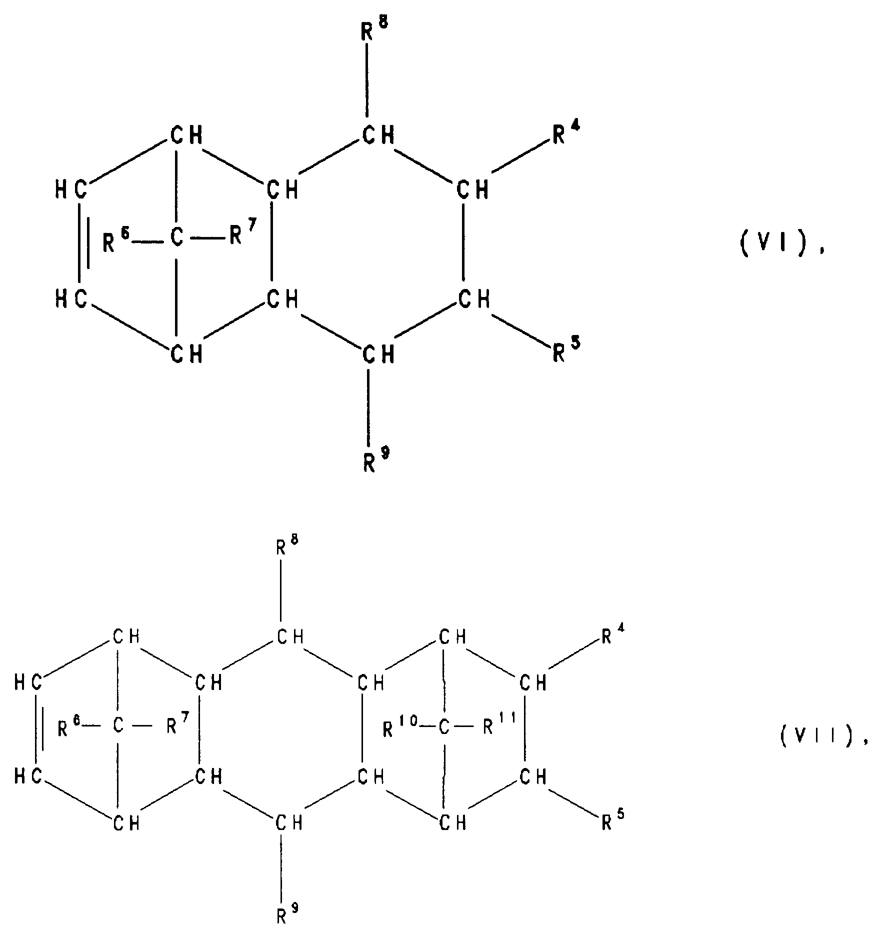
, worin R⁴, R⁵, R⁶, R⁷, R⁸, R⁹, R¹⁰ und R¹¹ gleich oder verschieden sind und ein Wasserstoffatom oder einen C₁-C₃₀-Kohlenwasserstoffrest, z.B. einen linearen oder verzweigten C₁-C₈-Alkylrest, C₆-C₁₈-Arylrest, C₇-C₂₀-Alkylenarylrest oder einen cyclischen oder acyclischen C₂-C₂₀-Alkenylrest bedeuten, oder zwei oder mehrere Reste R⁴ bis R¹¹ cyclisch verbunden sind, wobei gleiche Reste in den verschiedenen Formeln eine unterschiedliche Bedeutung haben können, 0 bis 45 Gew.-%, bezogen auf die Gesamtmasse des Cycloolefinpolymers, polymerisierte Einheiten mindestens eines monocyclischen Olefins der Formel VIII 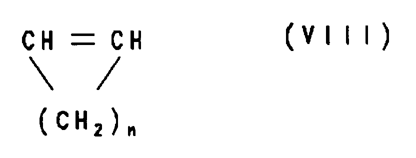
worin n eine Zahl von 2 bis 10 ist,
0 bis 99 Gew.-%, bezogen auf die Gesamtmasse des Cycloolefinpolymers, polymerisierte Einheiten eines acyclischen Olefins der Formel IX 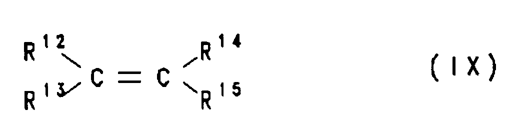
worin R¹², R¹³, R¹⁴, R¹⁵ gleich oder verschieden sind und ein Wasserstoffatom oder C₁-C₁₀-Kohlenwasserstoffrest, z.B. einen C₁-C₈-Alkylrest oder C₆-C₁₄-Arylrest bedeuten,
und eine olefinisch ungesättigte Endgruppe mit mindestens 3 C-Atomen.

Bevorzugt enthalten die Cycloolefinpolymere polymerisierte Einheiten mindestens eines polycyclischen Olefins, insbesondere der Formel II oder IV, und eines acyclischen Olefins der Formel IX, welches bevorzugt 2-20 C-Atome aufweist, insbesondere Ethylen.

Bevorzugt sind Cycloolefinpolymere, die polymerisierte Einheiten polycyclischer Olefine mit Norbornengrundstruktur, besonders bevorzugt Norbornen oder Tetracyclododecen, enthalten. Bevorzugt sind auch Cycloolefinpolymere, die polymerisierte Einheiten acyclischer Olefine, wie alpha-Olefine, besonders bevorzugt Ethylen, enthalten. Besonders bevorzugt sind Norbornen/Ethylen- und Tetracyclododecen/Ethylen-Copolymere mit einer olefinisch ungesättigten Endgruppe mit mindestens 3 C-Atomen.

Der Anteil polymerisierter Einheiten acyclischer Olefine der Formel IX beträgt 0 bis 99 Gew.-%, bevorzugt 5-80 Gew.-%, besonders bevorzugt 10-60 Gew.-%, bezogen auf die Gesamtmasse des Cycloolefinpolymers.

Die erfindungsgemäßen Cycloolefinpolymere mit endständigen olefinisch ungesättigten Gruppen weisen Glastemperaturen zwischen -20°C und 400°C, bevorzugt zwischen 50°C und 200°C auf. Die Viskositätszahl (Dekalin, 135°C, DIN 53728) liegt zwischen 25 und 200 ml/g, bevorzugt zwischen 25 und 100 ml/g, insbesondere bevorzugt zwischen 25 und 50 ml/g.

Die erfindungsgemäßen Cycloolefinpolymere sind amorphe Polyolefine mit hoher Transparenz und hohen Wärmeformbeständigkeiten und engen Molekulargewichtsverteilungen. Sie können für optische Bauteile wie Linsen, Scheiben, Abdeckungen, Gläser eingesetzt werden. Weiterhin eignen sie sich als Edukte für die Herstellung von COP mit endständigen polaren funktionellen Gruppen, ohne daß es bei den Funktionalisierungen zur Vergelung kommt.

Die vorliegende Erfindung betrifft außerdem ein Verfahren zur Herstellung eines Cycloolefinpolymers mit einer Lösungsviskosität > 0,25 dl/g, in Gegenwart eines Übergangsmetallkatalysators, dadurch gekennzeichnet, daß mindestens ein Cycloolefin und gegebenenfalls eines oder mehrere acyclische Olefine umgesetzt werden mit weniger als 25 Mol-%, bezogen auf die Gesamtmenge an Monomeren, eines von dem/den acyclischen Olefin(en) und dem/den Cycloolefin(en) verschiedenen Olefins mit mindestens 3 C-Atomen.

Es wurde gefunden, daß sich durch Zusatz von Olefinen mit mindestens 3 C-Atomen während der Polymerisation von Cycloolefinpolymeren mit Übergangsmetallverbindungen in Gegenwart eines Cokatalysators, Cycloolefinpolymere mit olefinisch ungesättigten Endgruppen synthetisieren lassen und daß sich durch die Wahl des Konzentrationsverhältnisses des Olefins mit mindestens 3 C-Atomen zu den Cycloolefin-Monomeren die Molekulargewichte der Cycloolefinpolymere gezielt einstellen lassen.

Aufgrund der molekulargewichtsregelnden Wirkung sollen die Olefine mit mindestens 3 C-Atomen im Folgenden als Regler bezeichnet werden.

Als Regler eignen sich lineare oder verzweigte C₃-C₁₈-Olefine wie Propylen, Buten, Isobutylen, Penten, Hexen, Hepten, Octen, 4-Methylpenten, Butadien, Isopren, oder cyclische Olefine wie Cyclopenten, Cyclohexen, Vinylcyclohexan, Vinylnorbornen, Vinylcyclohexen, Cyclopentadien, Dicyclopentadien, Styrol oder α-Methylstyrol.

Zur Herstellung der Cycloolefinpolymere im Sinne der Erfindung wird der Regler in der Monomermischung vorgelegt bevor die Polymerisation gestartet wird. Die Regler werden in der gewünschten Konzentration in das Monomergemisch eingebracht. Bei den gasförmigen Olefinen kann die Konzentration durch Einstellen des Partialdrucks bei der jeweiligen Temperatur eingestellt werden. Die Konzentration der flüssigen Olefine läßt sich einfach durch Zugabe der entsprechenden Menge einstellen. Die Konzentrationen der Regler liegen zwischen 0.001 mol und 1,5 mol, bevorzugt zwischen 0.01 und 1 mol, bezogen auf einen Liter der Monomerlösung. Nach Zugabe des polymerisationsaktiven Katalysators kann die Polymerisation weitergeführt werden, wie sie für Cycloolefinpolymere in EP 203 799, EP 283 164, DE 2421838, EP 156 464 oder EP 407 870 beschrieben ist, auf die hiermit ausdrücklich Bezug genommen wird. Die Polymerisation kann kontinuierlich oder diskontinuierlich durchgeführt werden.

Der bei der Polymerisation verbrauchte Regler kann während der Polymerisation kontinuierlich nachdosiert werden. Die Polymerisationsaktivitäten der eingesetzten Metallocenkatalysatoren werden durch die Zugabe der Regler in der Regel nicht beeinträchtigt. Für geringe Konzentrationen kann sogar eine Steigerung der Polymerisationsaktiviäten beobachtet werden. Dieses Verhalten ist besonders für die wirtschaftliche Herstellung der Cycloolefinpolymere mit olefinisch ungesättigten endständigen Gruppen von Interesse.

Das erfindungsgemäße Verfahren arbeitet bei Temperaturen von -78 bis 150°C und einem Druck von 0,01 bis 64 bar, in Gegenwart eines oder mehrerer Katalysatoren, welche mindestens einen Cokatalysator und mindestens eine Übergangsmetallverbindung enthalten. Solche Katalysatorensysteme sind z.B. beschrieben in EP 203 799, EP 283 164, P 43 04 309.7, P 43 04 308.9 oder DE 2421838, auf die hiermit ausdrücklich Bezug genommen wird. Bevorzugt sind Metallocen-Aluminoxan Katalysatorsysteme.

Beispiele für eingesetzte Übergangsmetallverbindungen sind:
rac-Dimethylsilyl-bis-(1-indenyl)-zirkondichlorid,
rac-Dimethylgermyl-bis-(1-indenyl)-zirkondichlorid,
rac-Phenylmethylsilyl-bis-(1-indenyl)-zirkondichlorid,
rac-Phenylvinylsilyl-bis-(1-indenyl)-zirkondichlorid,
1-Silacyclobutyl-bis(1-indenyl)-zirkondichlorid,
rac-Diphenylsilyl-bis-(1-indenyl)-hafniumdichlorid,
rac-Phenylmethylsilyl-bis-(1-indenyl)-hafniumdichlorid,
rac-Diphenylsilyl-bis-(1-indenyl)-zirkondichlorid,
rac-Ethylen-1,2-bis-(1-indenyl)-zirkondichlorid,
Dimethylsilyl-(9-fluorenyl)-(cyclopentadienyl)-zirkondichlorid,
Diphenylsilyl-(9-fluorenyl)-(cyclopentadienyl)-zirkondichlorid,
Bis(1-indenyl)-zirkondichlorid,
Diphenylmethylenen-(9-fluorenyl)-cyclopentadienylzirkondichlorid,
Isopropylen-(9-fluorenyl)-cyclopentadienyl-zirkondichlorid,
Phenylmethylmethylen-(9-fluorenyl)-cyclopentadienyl-zirkondichlorid,
Isopropylen-(9-fluorenyl)-(1-(3-isopropyl)cyclopentadienyl)-zirkondichlorid,
Isopropylen-(9-fluorenyl)(1-(3-methyl)cyclopentadienyl)-zirkondichlorid,
Diphenylmethylen-(9-fluorenyl)(1-(3-methyl)cyclopentadienyl)-zirkondichlorid,
Methylphenylmethylen-(9-fluorenyl)(1-(3-methyl)cyclopentadienyl)-zirkondichlorid,
Dimethylsilyl-(9-fluorenyl)(1-(3-methyl)-cyclopentadienyl)-zirkondichlorid,
Diphenylsilyl-(9-fluorenyl)(1-(3-methyl)cyclopentadienyl)-zirkondichlorid,
Diphenylmethylen-(9-fluorenyl)(1-(3-tert.-butyl)cyclopentadienyl)-zirkondichlorid,
Isopropylen-(9-fluorenyl)(1-(3-tert.-butyl)cyclopentadienyl)-zirkondichlorid,
Isopropylen-(cyclopentadienyl)-(1-indenyl)-zirkondichlorid,
Diphenylcarbonyl-(cyclopenadienyl)-(1-indenyl)-zirkondichlorid,
Dimethylsilyl-(cyclopentadienyl)-(1-indenyl)-zirkondichlorid,
Isopropylen-(methylcyclopentadienyl)-(1-indenyl)-zirkondichlorid,
Isopropylen-bis(1-indenyl)-zirkondichlorid,
4-(η⁵-cyclopentadienyl)4,7,7-trimethyl-(η⁵-4,5,6,7-tetrahydroindenyl)zirkondichlorid
und analoge Hafnocene,
Titantetrachlorid, VOCl₃, VOCl₂(OCH₃), VOCl₂(OC₂H₅) und VOCl(OC₂H₅)₂.

Ein weiterer Aspekt der Erfindung sind funktionalisierte Cycloolefinpolymere mit einer Lösungsviskosität > 0,25 dl/g, enthaltend polymerisierte Einheiten mindestens eines Cycloolefins und gegebenenfalls polymerisierte Einheiten eines oder mehrerer acyclischer Olefine, dadurch gekennzeichnet, daß das Cycloolefinpolymer an einem oder beiden Enden eine von olefinisch ungesättigten Endgruppen verschiedene endständige funktionelle Gruppen trägt.

Die endständige funktionelle Gruppe hat bevorzugt die Formel X 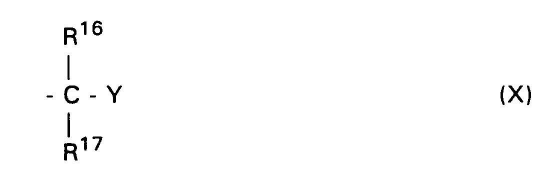
worin R¹⁶ und R¹⁷ gleich oder verschieden sein können und einen Wasserstoffrest, einen aliphatischen oder aromatischen C₁-C₃₀-Kohlenwasserstoffrest, ein Carbonsäureanhydrid, einen Silyl- oder Siloxanrest, einen Sauerstoffrest J, Br, CN, Cl, F, OH, OR', OCOR', COOH, COR, COOR', NH₂, NHR', NR'₂, SOH, SO₂H, SO₃H, SOR',SO₂R' oder SO₃R' bedeutet, wobei R' ein aliphatischer oder aromatischer C₁-C₂₀-Kohlenwasserstoffrest ist,
und Y eine Gruppe 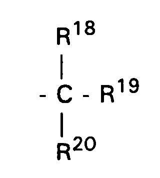
bedeutet,
worin R¹⁸, R¹⁹ und R²⁰ gleich oder verschieden sein können und einen Wasserstoffrest, einen aliphatischen oder aromatischen C₁-C₃₀-Kohlenwasserstoffrest, ein Carbonsäureanhydrid, einen Silyl- oder Siloxanrest, einen Sauerstoffrest J, Br, CN, Cl, F, OH, OR'', OCOR'', COOH, COOR'', NH₂, NHR'', NR''₂, SOH, SO₂H, SO₃H, SOR'',SO₂R'' oder SO₃R'' bedeutet, wobei R'' ein aliphatischer oder aromatischer C₁-C₂₀-Kohlenwasserstoffrest ist, oder die beiden Reste R¹⁶ und R¹⁸ durch ein Sauerstoffatom ersetzt sind, so daß ein Epoxid vorliegt. Es können auch zwei oder mehr der Reste R¹⁶-R²⁰ cyclisch miteinander verbunden sein.

Besonders bevorzugte Reste R¹⁶, R¹⁷, R¹⁸, R¹⁹ und R²⁰ sind Hydroxy-, Alkoxy-, Aryloxy-, Amino-, Halogen-, Imino-, Thio-, Ester-, Thioester-, Carbonsäure-, Keton-, Amid-, Carbonsäureanhydrid-, Carboxylat- sowie Epoxidendgruppen.

Bevorzugt sind Cycloolefinpolymere mit solchen, von olefinisch ungesättigten Endgruppen verschiedenen endständigen funktionellen Gruppen, die durch eine polymeranaloge Umsetzung der erfindungsgemäßen Cycloolefinpolymere zugänglich sind, welche an einem oder beiden Enden olefinisch ungesättigte Gruppen mit mindestens 3 C-Atomen aufweisen.

Der Stand der Entwicklung in der organischen Synthese bietet hierzu eine Vielzahl von Reaktionen (Advanced Organic Chemistry, Jerry March, Verlag John Wiley & Sons, New York 1985, Seiten 657-779 oder Organikum, VEB Deutscher Verlag der Wissenschaften, Berlin 1986, auf die beide hiermit ausdrücklich Bezug genommen wird). Im Folgenden sind beispielhaft einige Umsetzungen beschrieben:

Durch Addition von Halogenwasserstoffen und Halogenen sind Cycloolefinpolymere mit terminalen Halogenen zugänglich. Durch Anlagerung von Wasser ist die direkte Einführung von Hydroxyguppen möglich. Hydroxygruppen lassen sich auch durch eine Hydroborierung/Oxidation an das Kettenende des Cycloolefinpolymer bringen. Durch eine nukleophile Substitution der Halogene lassen sich Hydroxy, Alkoxy, Aryloxy, Amino, Imino, Thio, Cyano oder Alkyl-und Arylgruppen einführen. Cycloolefinpolymere mit Epoxidendgruppen sind durch Umsetzungen mit z.B. Persäuren möglich. Über eine Enmaleinierung lassen sich Anhydridgruppen einführen. Über Umsetzungen der OH-terminierten Cycloolefinpolymere sind eine Vielzahl weiterer Verbindungen möglich, wie z.B. Ester von Carbon-, Mineral-, und Sulfonsäuren und Silylester. Die Anlagerung der Halogenwasserstoffe oder Halogene kann schon bei Raumtemperatur oder tieferen Temperaturen unter weitesgehendem Ausschluß von Licht durchgeführt werden. So gelingt die Anlagerung von Brom bei 10°C und Dekalin als Lösungsmittel. Die Reaktion verläuft quantitativ, wie aus dem Verschwinden der olefinischen Protonen im ¹H-NMR zu erkennen ist.

Die erfindungsgemäßen Cycloolefinpolymere mit von olefinisch ungesättigten Endgruppen verschiedenen endständigen funktionalisierten Gruppen weisen Glastemperaturen zwischen -20°C und 400°C, bevorzugt zwischen 50°C und 200°C auf. Die Viskositätszahl (Dekalin, 135°C, DIN 53728) liegt zwischen 25 und 200 ml/g, bevorzugt zwischen 25 und 100 ml/g, besonders bevorzugt zwischen 25 und 50 ml/g.

COP mit endständigen funktionellen Gruppen können als Additive in Polymeren eingesetzt werden. Durch COP mit endständigen funktionellen Gruppen lassen sich die Oberflächeneigenschaften von unpolaren Polymeren modifizieren und so z.B. die Bedruckbarkeit und Hafteigenschaften verbessern. COP mit endständigen funktionellen Gruppen können als polymere Emulgatoren zur Verbesserung der Phasenhaftung in Polymerblends eingesetzt werden. Durch eine Reaktion der funktionellen Gruppe mit einer Komponente des Blends kann die Phasenhaftung weiter optimiert werden. In einer anderen Anwendung lassen sich die COP mit endständigen funktionellen Gruppen als Viskositätsmodifikatoren oder Fließverbesserer von Erdölen, Mineralölen und ähnlichen Systemen einsetzen.

Ein weiterer Aspekt der Erfindung sind Blockcopolymere enthaltend Blöcke aus den erfindungsgemäßen funktionalisierten Cycloolefinpolymeren. Die Blockcopolymere können Di-, Tri-, Multi- oder Sternblockcopolymere wie auch Graftcopolymere sein.

Cycloolefinpolymer-Blockcopolymere im Sinne der Erfindung enthalten mindestens einen Block der erfindungsgemäßen funktionalisierten Cycloolefinpolymere und mindestens einen Block eines von COP verschiedenen Polymeren oder Copolymeren. Bei diesen von COP verschiedenen Polymeren oder Copolymeren kann es sich um amorphe oder teilkristalline Polymere handeln. Bevorzugt sind amorphe Polymere oder Copolymere mit Glasstufen im Bereich von -100 bis 150°C. Beispiele für solche Polymere sind Polystyrol, Polysiloxane, Polyoxytetramethylen, Polybutadien, Polyisopren, Polyacrylate, Polymethacrylate, Poly(styrol-co-butadien), Poly(styrol-co-isopren).

Die Diblock-, Triblock- und verzweigte Multiblockcopolymere lassen sich durch geeignete Kupplungsmethoden aus Cycloolefinpolymeren, mit von olefinisch ungesättigten Endgruppen verschiedenen endständigen funktionalisierten Gruppen, herstellen. Die Molekulargewichte der von COP verschiedenen Polymerblöcke liegen im Bereich von 10⁴-10⁶, bevorzugt 10⁴-10⁵ g/mol. Die absoluten Molekulargewichte M_{w} der Cycloolefinpolymerblöcke liegen im Bereich von 5000 bis 10⁶, bevorzugt von 5000 bis 10⁵ und besonders bevorzugt im Bereich von 5000 bis 10⁴ g/mol. Die Polydispersität M_{w}/Mₙ der Blockcopolymere liegt im Bereich von 1-10, bevorzugt im Bereich von 1-5 und besonders bevorzugt im Bereich von 1-3.

Die erfindungsgemäßen Cycloolefinpolymer-Blockcopolymere lassen sich z.B. herstellen durch Kuppelung mit anionisch polymerisierten Polymeren und Copolymeren. Die Umsetzung von Cycloolefinpolymeren, die substituierbare Halogene am Kettenende besitzen, mit Anionen resultiert in einer Substitution des Halogens durch das Anion. Diese Reaktion läßt sich zur Kupplung von halogeniertem Cycloolefinpolymer mit den polymeriationsaktiven Anionen, wie sie bei der anionischen Polymerisation auftreten, ausnutzen. Auf diese Weise lassen sich Blockcopolymere aus Cycloolefinpolymeren und Monomeren herstellen, die einer anionischen Polymerisation zugänglich sind. Beispiele für anionisch polymerisierbare Monomere sind Vinylaromaten wie Styrol, alpha-Methylstrole, Methylstyrole, Dimethylstyrol, Vinylnaphthalin, konjugierte Diene wie Isopren, Butadien und Acrylat und Methacrylatmonomere wie z. B. Methylmethacrylat, Methylethylacrylat, Methylpropylacrylat, Methylacrylat, Ethylacrylat, Propylacrylate, Butylacrylate, Pentylacrylate, Hexylacrylate und höhere Homologe, Cyclohexylacrylate und subtituierte Cyclohexylacrylate.

Ein weiterer Aspekt der Herstellung von Blockcoplymeren, enthaltend Blöcke aus Cycloolefinpolymeren und anionisch herstellbaren Polymeren, ist die Umsetzung von Cycloolefinpolymer mit endständigen Bromresten und den Anionen von z.B. Polybutadien, Polyisopren oder Polystyrol. Das Cycloolefinpolymer mit terminalen Doppelbindungen wird in einem, unter den Reaktionsbedingungen gegenüber Brom und Anionen relativ inerten Lösungsmittel, z. B. Tetrachlorkohlenstoff oder Dekalin, gelöst und bei Temperaturen von -30 bis 50°C langsam mit einer Lösung von Brom, in dem zur Umsetzung verwendeten Lösungsmittel, so umgesetzt, daß immer nur ein Teil der zur vollständigen Bromierung nötigen Menge Brom zugesetzt wird. Diese Verfahrensweise wird fortgeführt bis die Eigenfarbe der Bromlösung auch in der Reaktionslösung über einen längeren Zeitraum (5-60 Minuten) erhalten bleibt. Die Herstellung von Polybutadien, Polyisopren oder Polystyrol durch anionische Polymerisation geschieht nach bekannten Methoden wie sie z. B. in *Advances in Polymer Science 56, Springer Verlag Berlin (1984)* beschreiben sind. Die Polymerlösung, die noch die anionischen Kettenenden enthält wird nach Beendigung der Bromierung bei Temperaturen von -30 bis 20°C der Cycloolefinpolymer-Lösung zugesetzt. Anschließend läßt man auf Raumtemperatur erwärmen und läßt die Lösung noch bei Temperaturen von 20 bis 100°C einige Zeit weiterrühren. Ein weiterer Aspekt der Herstellung von Cycloolefinpolymer Blockcopolymeren ist die Kupplung über Kondensationsverfahren. Cycloolefinpolymere mit endständigen Hydroxy, Amino, oder Anhydridgruppen lassen sich mit Polymeren die z. B. terminale Säure, Säurechlorid, Dialkylsilylhalogen, Dialkylsilylamino, oder Aminoendgruppen enthalten zu Blockcopolymeren verbinden.

Graftcopolymere sind über eine Copolymerisation von Cycloolefinpolymeren mit einer geeigneten Funktionalisierung und einem oder mehreren geeigneten Monomeren zugänglich. So kann man Cycloolefinpolymere mit Methacrylyol- oder Styrylendgruppen mit radikalisch polymerisierbaren Monomeren zu Graftcopolymeren umsetzen. Die Methacryloyl oder Styrylendgruppen lassen sich durch Umsetzen von Cycloolefinpolymeren mit z. B. terminalen Hydroxy- oder Aminoendgruppen und Methacryloylchlorid und 4-Vinylbenzoylchlorid oder 4-Vinylbenzylchlorid in das Cycloolefinpolymer einführen.

Das Eigenschaftsspektrum der Blockcopolymere ist abhängig von den Anteilen und Eigenschaften der mit den Cycloolefincopolymeren kombinierten Polymeren und Copolymeren. Es kann von thermoplastischen Elastomeren bis zu spröden Thermoplasten reichen. Die Kombination eines Cycloolefinpolymeren als Matrix mit einem Polymer mit niedriger Glastemperatur (Tg) wie Polybutadien führt zu einem schlagzähen Polymer. Die Zumischung eines solchen Blockcopolymeren zu unmodifizierten Cycloolefinpolymeren erhöht ebenfalls die Schlagartigkeit.

Weitere Anwendungen solcher Blockcopolymere sind die Verbesserung der Phasenhaftung und Mischbarkeit von Cycloolefinpolymeren und anderen Polymeren. Durch Zumischen von Blockcopolymeren mit z.B. polaren Blöcken zu Cycloolefinpolymeren läßt sich die Oberfläche dieser Polymere modifizieren und damit die Haftung zu anderen Materialien verbessern. Dies ist sehr wichtig für das Bedrucken, Lackieren oder Metallisieren. Weitere Anwendungen solcher Blockcopolymere sind Emulgatoren, Viskositätsmodifikatoren und Fließhilfsmittel.

### Beispiel 1

Ein 1,5-dm³-Reaktor wurde mit 1 Liter Benzinfraktion (Siedebereich: 90-110°C) und 20 ml toluolische Methylaluminoxanlösung (10,1 Gew.-% Methylaluminoxan der Molmasse 1300 g/mol nach kryoskopischer Bestimmung) befüllt und bei 70°C ca. 30 min gerührt, um eventuell vorhandene Verunreinigungen zu entfernen. Nach Ablassen der Lösung wurde der Reaktor mit 480 cm³ einer 85 gewichtsprozentigen Lösung von Norbornen in Toluol und mit 20 cm³ 1-Octen beschickt. Durch mehrfaches Aufdrücken von Ethylen (6 bar G) wurde die Lösung mit Ethylen gesättigt und anschließend 10 cm³ der toluolischen Methylaluminoxanlösung in den Reaktor gegeben und 5 Minuten bei 70°C gerührt. Eine Lösung von 5,43 mg Isopropylen-(1-cyclopentadienyl) (1-indenyl) zirkondichlorid in 10 cm³ toluolischer Methylaluminoxanlösung wurde nach 15 minütiger Voraktivierung zugegeben.
Unter Rühren (750 UPM) wurde 30 Minuten bei 70°C polymerisiert, wobei der Ethylendruck durch Nachdosieren bei 6 bar G gehalten wurde. Die homogene Reaktionslösung wurde in ein Gefäß abgelassen und mit ca 1 ml Wasser versetzt. Anschließend wird die Lösung mit einem Filterhilfsmittel versetzt und über eine Drucknutsche filtriert. Diese Lösung wird schnell in 5 dm³ Aceton eingegossen, 10 min gerührt und filtriert. Der erhaltene Feststoff wurde mit Aceton gewaschen. Das erneut filtrierte Polymer wurde bei 80°C und einem Druck von 0,2 bar 15 Stunden getrocknet.
Es wurden 89,1 g eines farblosen Polymers erhalten. Die Bestimmung der Viskositätszahl wurde gemäß DIN 53728 in Dekalin vorgenommen. Die Lösung wurde in einem Kappillarviskosimeter bei 135°C vermessen. Die Viskositätszahl betrug 26,3 dl/g. Die Glastemperaturen wurden mit einem DSC7 der Firma Perkin Elmer bestimmt. Die Glastemperaturen wurde bei einer Heizrate von 20°C /min aus der 2. Heizkurve ermittelt und betrug 172°C. Der Gehalt an ungesättigten Doppelbindungen mittels Kernresonanspektroskopie ermittelt. Das Verhältnis der Intensitäten von olefinischen Protonen zu aliphatischen Protonen betrug 0.065 %. Das Molekulargewicht des Polymeren wurde mittels Gelpermerationschromatographie bei 135°C in ortho-Dichlorbenzol ermittelt. Als Standards wurden Polyethylenfraktionen verwendet. Für das Polymer wurden folgende Werte gefunden: Mₙ: 5700 g/mol, M_{w}: 13500 g/mol, M_{w}/Mₙ:2,4.

### Beispiele 2

Ein 1,5-dm³-Reaktor wurde mit 1 Liter Benzinfraktion (Siedebereich: 90-110°C) und 20 ml toluolische Methylaluminoxanlösung (10,1 Gew.-% Methylaluminoxan der Molmasse 1300 g/mol nach kryoskopischer Bestimmung) befüllt und bei 70°C ca. 30 min gerührt, um eventuell vorhandene Verunreinigungen zu entfernen. Nach Ablassen der Lösung wurde der Reaktor mit 470 cm³ einer 85 gewichtsprozentigen Lösung von Norbornen in Toluol und mit 30 cm³ 1-Octen beschickt. Durch mehrfaches Aufdrücken von Ethylen (6 bar G) wurde die Lösung mit Ethylen gesättigt und anschließend 10 cm³ der toluolischen Methylaluminoxanlösung in den Reaktor gegeben und 5 Minuten bei 70°C gerührt. Eine Lösung von 1,1 mg Isopropylen-bis(1-indenyl) zirkondichlorid in 10 cm³ toluolischer Methylaluminoxanlösung wurde nach 15 minütiger Voraktivierung zugegeben.
Unter Rühren (750 UPM) wurde 1 Stunde bei 70°C polymerisiert, wobei der Ethylendruck durch Nachdosieren bei 12 bar G gehalten wurde.
Die homogene Reaktionslösung wurde in ein Gefäß abgelassen und mit ca 1 ml Wasser versetzt. Anschließend wird die Lösung mit einem Filterhilfsmittel versetzt und über eine Drucknutsche filtriert. Diese Lösung wird schnell in 5 dm³ Aceton eingegossen, 10 Minuten gerührt und filtriert. Der erhaltene Feststoff wurde mit Aceton gewaschen. Das erneut filtrierte Polymer wurde bei 80°C und einem Druck von 0,2 bar 15 Stunden getrocknet.
Es wurden 50,8 g eines farblosen Polymers erhalten. Die Bestimmung der Viskositätszahl, Glasstufe, Molekulargewicht etc. geschah analog zu Beispiel 1. Das Polymer weist folgende Werte auf: VZ = 40 dl/g, T_{g}:183°C, Mₙ:14000 g/mol, M_{w}:30000 g/mol, M_{w}/Mₙ:2,0. Der Anteil der olefinischen Protonen betrug 0.058 %.

### Beispiele 3-7

Die Durchführung geschah analog zu Beispiel 1. Es wurden verschiedene Mengen 1-Octen eingesetzt. Tabelle 1 faßt die Versuchsparameter zusammen. Die analytischen Daten der Polymere sind in Tabelle 2 beschrieben.

**Tabelle 1**

| Bsp. | Katalysator | Kat.-Menge | Druck | 1-Octen | Monomerl. | Reaktionsz. | Ausbeute |
|---|---|---|---|---|---|---|---|
| | | mg | Bar | ml | ml | Min. | g |
| 3 | 1 | 4,56 | 6 | 5 | 495 | 30 | 46,3 |
| 4 | 1 | 5,02 | 6 | 20 | 480 | 30 | 6,0 |
| 5 | 2 | 1,00 | 12 | 10 | 490 | 60 | 38,3 |
| 6 | 2 | 1,15 | 12 | 60 | 440 | 60 | 26,7 |
| Katalysator 1: Isopropylen-(1-cyclopentadienyl) (1-indenyl) zirkondichlorid Katalysator 2: Isopropylen-bis(1-indenyl) zirkondichlorid | | | | | | | |

**Tabelle 2**

| Bsp. | Viskositätszahl | Mw | Mₙ | M_{w}/Mₙ | Olefinische Prot. | T_{g} |
|---|---|---|---|---|---|---|
| | dl/g | g/mol | g/mol | | % | °C |
| 3 | 45,7 | 31900 | 12.600 | 2,53 | nicht bestimmt | 181 |
| 4 | 26,3 | 13500 | 5700 | 2,28 | 0,058 | 172 |
| 5 | 39,8 | 61000 | 26000 | 2,34 | 0,038 | 149 |
| 6 | 36,4 | 19000 | 9500 | 2,00 | 0,088 | 121 |

### Vergleichsbeispiel 1

Der in Beispiel 1 beschriebene Versuch wurde unter den gleichen Bedingungen wiederholt. Als Abänderung wurde in diesem Versuch kein Octen bei der Polymerisation des Cycloolefinpolymers zugesetzt.
Es wurden 40.9 g eines weißen Pulvers erhalten. Die Analyse des Materials ergab: VZ = 62,7 dl/g, T_{g} = 184°C , M_{w} = 48400 g/mol, Mₙ = 15500 g/mol, M_{w}/Mₙ = 3,13. Das ¹H-NMR-Spektrum des Polymers zeigt keine olefinischen Protonen.

### Vergleichsbeispiel 2

Der in Beispiel 2 beschriebene Versuch wurde unter den gleichen Bedingungen wiederholt. Als Abänderung wurde in diesem Versuch kein Octen bei der Polymerisation von Cycloolefinpolymer zugesetzt.
Es wurden 18,9 g eines weißen Pulvers erhalten. Die Analyse des Materials ergab: VZ = 172,2 dl/g,, T_{g} = 153°C, M_{w} = 165000g/mol, Mₙ = 47000g/mol,M_{w}/Mₙ = 3,5. Das ¹H-NMR-Spektrum des Polymers zeigt keine olefinischen Protonen.

## Patentansprüche

1. Cycloolefinpolymer mit einer Lösungsviskosität > 0,25 dl/g, (gemäß DIN 53 728 in Dekalin bei 135°C) enthaltend polymerisierte Einheiten mindestens eines Cycloolefins und gegebenenfalls polymerisierte Einheiten eines oder mehrerer acyclischer Olefine, dadurch gekennzeichnet, daß das Cycloolefinpolymer an einem oder beiden Enden eine olefinisch ungesättigte Gruppe mit mindestens 3 C-Atomen aufweist.

2. Cycloolefincopolymer gemäß Anspruch 1, enthaltend polymerisierte Einheiten mindestens eines Cycloolefins und mindestens eines acyclischen Olefins, dadurch gekennzeichnet, daß das Cycloolefinpolymer an einem Ende eine olefinisch ungesättigte Gruppe mit mindestens 3 C-Atomen aufweist.

3. Verfahren zur Herstellung eines Cycloolefinpolymers mit einer Lösungsviskosität > 0,25 dl/g, (gemäß DIN 53 728 in Dekalin bei 135°C) in Gegenwart eines Übergangsmetall-katalysators, dadurch gekennzeichnet, daß mindestens ein Cycloolefin und gegebenenfalls eines oder mehrere acyclische Olefine umgesetzt werden mit weniger als 25 Mol-%, bezogen auf die Gesamtmenge an Monomeren, eines von dem/den acyclischen Olefin(en) und dem/den Cycloolefin(en) verschiedenen Olefins mit mindestens 3 C-Atomen.

4. Funktionalisiertes Cycloolefinpolymer mit einer Lösungsviskosität > 0,25 dl/g, (gemäß DIN 53 728 in Dekalin bei 135°C) enthaltend polymerisierte Einheiten mindestens eines Cycloolefins und gegebenenfalls polymerisierte Einheiten eines oder mehrerer acyclischer Olefine, dadurch gekennzeichnet, daß das Cycloolefinpolymer an einem oder beiden Enden eine von olefinisch ungesättigten Endgruppen verschiedene endständige funktionelle Gruppen trägt.

5. Blockcopolymer, enthaltend Blöcke aus mindestens einem funktionalisierten Cycloolefinpolymeren gemäß Anspruch 4.

6. Graftcopolymer, enthaltend Blöcke aus mindestens einem funktionalisierten Cycloolefinpolymeren gemäß Anspruch 4.
